# EUROPÄISCHE PATENTANMELDUNG

(11) **EP 2 551 538 A1**
(43) Veröffentlichungstag der Anmeldung: **30.01.2013**
(21) Anmeldenummer: 12165920.5
(22) Anmeldetag: 27.04.2012
(51) Int. Cl.: F16C 19/44, F16C 27/08, F16C 33/34

(54) **Radiallager für ein Losrad eines Kraftfahrzeuggetriebes**

(30) Priorität: 28.07.2011 DE 102011080027; 28.07.2011 DE 102011080021
(71) Anmelder: Schaeffler Technologies AG & Co. KG, 91074 Herzogenaurach (DE)
(72) Erfinder: Metten, Norbert, 91086 Aurachtal (DE); During, Tom-Michel, 91052 Erlangen (DE)

(57) **Zusammenfassung**

Die Erfindung betrifft ein Radiallager (1) für ein Losrad (20) eines Kraftfahrzeuggetriebes, mit Wälzkörpern (25) in Wälzkörpertaschen (28) und mit wenigstens einer Tunnelrolle (10), welche einen größeren Außendurchmesser (12) als die Wälzkörper (25) und einen Längsschlitz (6) aufweist. Die Erfindung betrifft weiter eine Losradlagerung mit einem derartigen Radiallager.

## Beschreibung

Die Erfindung betrifft ein Radiallager für ein Losrad eines Kraftfahrzeuggetriebes, mit Wälzkörpern in Wälzkörpertaschen und mit wenigstens einer Tunnelrolle, welche einen größeren Außendurchmesser als die Wälzkörper und einen Längsschlitz aufweist. Die Erfindung betrifft weiter eine Losradlagerung mit einem derartigen Radiallager.

### Hintergrund der Erfindung

Losradlager sind Wälzlagerungen, mit denen Losräder gegenüber einer Welle drehbar radial gelagert sind. Derartige Anordnungen mit Radiallagern sind in DE - AS - 1 575 611 beschrieben. Darüber hinaus sind in DE - AS - 1 575 611 auch die Probleme mit Axiallagerungen von Losrädern beschrieben. So zeigt z.B. JP02163509A eine Losradlagerung eines Kraftfahrzeuggetriebes mit einem Radiallager und mit einem Axiallager.

Die Besonderheit in Losradlagerungen ist darin zu sehen, dass diese nahezu lastfrei rotieren, wenn die Losräder ohne Drehmomentübertragung auf der Getriebewelle rotierend mitgeschleppt werden, und nahezu still stehend hohe Lasten aufnehmen, wenn das jeweilige Zahnrad mit der Getriebewelle gekuppelt ist. Die Probleme, die mit diesen Besonderheiten verbunden sind, sind dem Fachmann bekannt und beispielsweise in DE-AS - 1 575 611 geschildert.

Eine Anordnung mit spielfrei vorgespannten radialen Losradlagerungen zeigt DE 197 34 980 A1. Wenn das Losrad mit der Welle gekuppelt ist, legen sich die Wälzkörper bei Rotation der Getriebewelle aufgrund der Schwerkraft außen an dem Losrad an. Der Kontakt der Rollen zur Getriebewelle ist aufgrund des Radialspieles zumindest partiell aufgehoben. Wenn das Losrad aus dem gekuppelten Zustand in den geschleppten Betriebszustand wechselt und das Losradlager rotierend angeschleppt wird, können die Rollen aufgrund der Massenträgheit des Lagers und aufgrund des fehlenden Kontakts mit der Laufbahn auch anschmieren oder mit Verschleiß schlupfen. Es wird deshalb eine Losradlagerung vorgeschlagen, in der Losradlagerung hohle Rollen, sogenannte Tunnelrollen, einzusetzen, deren Durchmesser so geringfügig größer ist als der Durchmesser der anderen Rollen, dass diese das radiale Spiel überbrücken. Die Rollen sind elastisch ausgebildet und radial zwischen die Wälzlaufbahnen der Losradlagerung gespannt. Eine der Rollen ist aus einem Bandmaterial spiralförmig gewickelt und weist dementsprechend einen sich im Verlauf der Rolle mehrfach um den Umfang erstreckenden spiralförmigen Schlitz auf.

Weiterhin ist auch bekannt, dass bei Betrieb der Losradlagerungen hochfrequente Schwingungen entstehen, die als Geräusche das sogenannte Losradkreischen hervorrufen.

### Beschreibung der Erfindung

Der Erfindung liegt die Aufgabe zugrunde, ein Radiallager und eine Losradlagerung für ein Losrad eines Kraftfahrzeuggetriebes zu schaffen, mit denen die vorgenannten Nachteile vermieden werden können.

Die Aufgabe wird nach den Merkmalen des Anspruchs 1 gelöst.

Als Tunnelrolle sind in diesem Fall hohle Rollen, vorzugsweise hohlzylindrisch ausgebildete Rollen, zu verstehen. Zumindest eine dieser Tunnelrollen ist pro Wälzkörperreihe in Umfangsrichtung zwischen den Rollen des Rollenlagers angeordnet. Da die Tunnelrollen hohlzylindrisch ausgebildet sind, sind diese elastischer als die anderen Rollen, deren Grundköper von ihrem Material ausgefüllt ist. Tunnelrollen weisen deshalb Geräusche dämpfende Eigenschaften auf. Durch den Schlitz ist die Tunnelrolle elastisch noch nachgiebiger und deren Dämpfungsverhalten noch besser als das einer geschlossenen Hohlrolle. Der Längsschlitz erstreckt sich in radialer Richtung durchgängig durch die Wand. und unterbricht diese somit in Umfangsrichtung einmal vollständig.

Der Längsschlitz der Tunnelrolle in dem Radiallager zur Lagerung eines Losrades überstreicht danach vom ersten Ende zum zweiten Ende der Tunnelrolle entlang der Wandung einen Mittelpunktswinkel µ bezüglich des Querschnitts der Tunnelrolle bis 360°. Der Mittelpunktswinkel kann in diesem Falle auch als Teilwinkel < 360° oder als Vollwinkel = 360° eines Kreises bezeichnet werden, dessen Kreislinie beispielsweise den Umfang der Tunnelrolle beschreibt. Der gesamte Umfang der Mantelfläche ist in beliebigen Querschnitten (quer zur Rotationsachse der Tunnelrolle) durch den Vollwinkel von 360° beschrieben. Die Erfindung sieht also vor, dass der Schlitz vom Anfang zum Ende und zurück so verläuft, dass er den Mantel in Umfangsrichtung höchstens einmal überstreicht.

Unregelmäßigkeiten an der vorzugsweise sehr glatten Oberfläche von Wälzkörpern verursachen im Wälzkontakt Spannungsspitzen und fördern Verschleiß an Rollen und Wälzlaufbahnen. Das trifft auch für Schlitze zu. Der spiralförmig ausgebildete Schlitz der Rollen nach DE 197 34 980 A1 steht permanent an mehreren Stellen und mit beiden Laufbahnen im Wälzkontakt, so dass die zuvor genannten Nachteile besonders zum Tragen kommen. Die Erfindungsgemäße Anordnung weist durch die Begrenzung des Winkels auf max. 360°, mit dem der Schlitz die Rolle überstreicht, den Vorteil auf, dass die Anzahl der Kontaktstellen gegenüber diesem bekannten Stand der Technik stark reduziert ist und damit die Risiken erhöhten Verschleißes geringer sind.

Die Ausgestaltung der Erfindung sieht vor, dass der Schlitz sich über weniger als die Hälfte der Mantelfläche erstreckt, also vom ersten Ende zum zweiten Ende der Tunnelrolle entlang der Wandung der Tunnelrolle einen Mittelpunktswinkel (µ) bezüglich des Querschnitts der Tunnelrolle von weniger als 180° überstreicht. Vorzugsweise erstreckt sich der Schlitz also innerhalb der Hälfte des Umfangs der Mantelfläche, so dass der Teilwinkel vom Vollwinkel 360° abweichend nur < / = 180° ist. Mit einer derartigen Ausbildung ist die Anzahl der Kontaktstellen des Schlitzes bei rotierender Rolle mit den Wälzlaufbahnen noch weiter reduziert.

Die Begrenzung auf den Umfangsbereich von 180° wirkt sich auch vorteilhaft auf die Fertigung einer Tunnelrolle dieses Typs aus, die in diesem Fall aus Flachmaterial gebogen werden kann. Dabei werden die Schnittenden des zylindrisch gebogenen Flachmaterials solange aufeinander zugeführt bis diese sich in Umfangsrichtung mit Abständen gegenüberliegen, die die Breiten des Schlitz begründet. Tunnelrollen, deren Längsschlitz sich dagegen nahezu über den gesamten Umfang erstreckt (Mittelspunktswinkel bis 360°) müssen dagegen im Ansatz spiralförmig gewickelt werden, was fertigungstechnisch aufwändiger ist, wenn Rollen mit hohen Genauigkeiten hergestellt werden sollen.

Die Tunnelrolle ist mit einem von einem ersten Ende der Tunnelrolle zu einem zweiten Ende der Tunnelrolle verlaufenden Längsschlitz versehen, der unter einem Winkel zu einer Achse, entweder der Rotationsachse oder zu einer Parallelen der Rotationsachse der Tunnelrolle in einer Wandung der Tunnelrolle geneigt. Also ist der Schlitz nicht achsparallel zur Rotationsachse der Tunnelrolle ausgerichtet, sondern verläuft so schräg zu dieser, dass der mit Winkeln α zu der Rotationsachse der Tunnelrolle von einem ersten Ende der Tunnelrolle zu einem zweiten Ende der Tunnelrolle verläuft, welche vorzugsweise 1 ° = / < α < / =45° sind. Die Winkel müssen im Verlauf des Schlitzes nicht gleich zueinander sein. Es kann also auch sein, dass der Schlitz kurvenartig oder zackenartig verläuft oder beliebig die Richtung wechselnd auslenkt weil er in beliebige Richtungen und mit verschiedenen Winkeln von der parallelen Linie auslenkt.

Die europäische Patentanmeldung EP 1 921 334 A2 zeigt ein Nadellager. Mindestens eine Nadel des Nadellagers ist dabei elastisch-nachgiebig ausgebildet, falls eine Last auf die äußere Fläche des Nadellagers ausgeübt wird. Die elastisch-verformbare Nadel besitzt dabei einen etwas größeren äußeren Durchmesser als die anderen nicht elastisch-verformbaren Nadeln. Die elastische Nachgiebigkeit der Nadeln wird dadurch erreicht, dass die Nadeln eine Hohlbohrung aufweisen und entlang der Länge der Nadeln parallel zu den Mantellinien und zur Rotationsachse ein Längsschlitz eingebracht ist, der geradlinig entlang der Wandung der Nadel verläuft. Die so ausgebildete elastisch-nachgiebige Nadel hat den einen Nachteil, dass der gerade Schlitz bei der Rollbewegung des Lagers über seine gesamte Länge mit den Rändern des Schlitzes im Wälzkontakt mit der Wälzlaufbahn steht. Derartige Wälzlager sind nur gering belastbar und dürfen nur mit geringen Drehzahlen rotieren oder nur Schwenken, weil die Kantenberührung im Wälzkontakt sehr hohe Spannungsspitzen erzeugt, wodurch die Rollen und Wälzlaufbahn beschädigt werden kann. Darüber hinaus erzeugt der pro Umdrehung einmal auf jede der Wälzlaufbahn treffende Schlitz störende Geräusche.

Die Tunnelrollen federn unter Last elastisch in einer Kontaktzone ein und wälzen an dieser ab, welche mit einer Kontaktlinie also mit Linienberührung an den Wälzlaufbahnen beschrieben werden kann, wobei die Kontaktlinie im Idealfall parallel zur Rotationsachse der Tunnelrolle ausgerichtet ist. Der Vorteil der schrägen Ausrichtung des Schlitzes liegt darin, dass bei Rotation des Lagers und Abwälzen der Tunnelrolle nicht der gesamte Schlitz auf einmal im Linienkontakt mit der/den jeweiligen Wälzlaufbahnen steht, sondern nur der Teil des Schlitzes am Schnittpunkt mit der Kontaktlinie. Dadurch wird Verschleiß vermieden und werden Geräusche reduziert.

Das Verhältnis von Außendurchmesser zu Wanddicke bestimmt die Elastizität, mit der die Tunnelrolle reagiert. Einerseits muss die Tunnelrolle elastisch nachgiebig genug sein, um sich unter Vorspannung ins Lager montieren zu lassen und um unter hohen Lasten auch auf den Durchmesser der anderen Rollen einzufedern. Andererseits muss die Tunnelrolle auch steif genug ausgebildet sein um die Spielfreiheit des Radiallagers zu gewährleisten. Ein Quotient aus der Wanddicke und dem Außendurchmesser weist vorzugsweise einen Wert von 0,04 bis 0,2 auf.

Der Typ der Rolle wird durch ein Verhältnis der Länge der Tunnelrolle zum Außendurchmesser bestimmt. Nadeln sind Rollen, deren Länge mindestens dem Dreifachen ihres Nenndurchmessers der Außenmantelfläche entspricht. Zylinderrollen sind dementsprechend Rollen deren Länge kleiner ist als das Dreifache des Nenndurchmessers der Rolle.

Darüber hinaus hat dieses Verhältnis bei Tunnelrollen auch Einfluss auf die Steifigkeit bzw. Elastizität, wenn die Wandstärke mit berücksichtigt wird. Je länger die Rolle, um so steifer ist diese. Je kürzer umso elastischer ist deren Reaktion. So ist es denkbar, die Steifigkeit der Tunnelrollen und damit den Grad der Spieleinstellung des Rollenlagers dadurch zu beeinflussen, dass die Tunnelrolle(n) im Lager länger oder kürzer als die üblichen Rollen sind. Vorzugsweise entspricht der Quotient aus der Länge der Tunnelrolle und deren Außendurchmesser einem Wert von 0,8 bis 4,0.

Der Schlitz muss in Umfangsrichtung gerichtet so breit sein, dass die Tunnelrollen ungehindert radial und umfangsseitig auf das radiale Maß der übrigen Rollen einfedern können Der in der äußeren Wandung der Tunnelrolle angebrachte Längsschlitz weist deshalb vorzugweise eine Breite mit einem Wert von 0,1 mm bis 0,7 mm auf.

Das Material aus dem die Tunnelrolle gefertigt ist, kann 16mnCr5 oder Ct45-oder 100Cr6 oder 1 00CrMn6 sein.

Losräder sind Zahnräder, die auf einer Getriebewelle angeordnet sind und die in lastfreien Zuständen relativ zur Getriebewelle, beispielsweise zu einer Getriebehauptwelle, rotieren. Die Losräder stehen im ständigen Zahneingriff mit einem weiteren Zahnrad, das in der Regel fest auf einer weiteren Getriebewelle eines Kfz-Getriebes sitzt. Auf der Getriebewelle sitzen mehrere der Losräder, von denen jedes im Zahneingriff mit einem der Zahnräder auf der weiteren Getriebewelle steht. Losräder werden je nach Schaltzustand von dem jeweiligen auf der weiteren Getriebewelle sitzenden Zahnrad mit Drehmomenten beaufschlagt oder mitgeschleppt. Wenn ein Gang eingelegt ist, ist eines der Losräder drehstarr mit der Getriebehauptwelle gekuppelt. Die weitere Getriebewelle ist von einer Getriebeeingangswelle aus angetrieben und mit ihr die auf der weiteren Getriebewelle sitzenden Zahnräder, wobei über eines der Zahnräder Drehmomente auf das mit der Getriebewelle gekuppelte Losrad und damit auf die Getriebewelle übertragen werden. Die anderen der Losräder werden durch die angetriebenen Zahnräder der weiteren Getriebewelle lastfrei mitgeschleppt. Wenn ein anderer Gang geschaltet wird, wird die drehstarre Verbindung zwischen dem Losrad und der Getriebehauptwelle ausgekuppelt und zwischen einem anderen der Losräder und der Getriebewelle eingekuppelt.

Moderne Losradlagerungen sind Wälzlager in Form von Rollenlagern. Die Rollenlager bestehen aus Rollen und in der Regel auch aus Käfigen. Rollen sind in ihrer Grundform außenzylindrisch ausgebildete rotationssymmetrische Körper, mit zwei Stirnseiten. Die Mantelflächen können von der außenzylindrischen Grundform abweichend ballig ausgeführt sein. Die Stirnseiten sind eben, wahlweise konkav oder konvex. Es können auch zusätzlich hohle Rollen ohne Schlitz vorgesehen sein. Die Rollen der Losradlager sind in der Regel Nadeln. Die Rollen sind in den Käfigen gehalten und geführt. In Radiallagern sind die Rollen mit ihren Rotationsachsen zueinander und zur Rotationsachse des Lagers parallel oder leicht verschränkt angeordnet.

Die Laufbahnen der Wälzlager sind entweder zylindrische Oberflächenabschnitte auf den Getriebewellen bzw. in Zahnrädern oder werden durch die Oberflächen von Lagerringen gebildet.

Mit der erfindungsgemäßen Tunnelrolle kann ein spielfreies Rollen- oder Nadellager einer Losradlagerung versehen werden. Das Losradlager weist einen Käfig auf, der eine Vielzahl von Nadeln und wahlweise eine, zwei oder mindestens drei Tunnelrollen haltert. Die Tunnelrollen sind dabei gleichmäßig verteilt am Umfang der Getriebewelle im Käfig angeordnet.

Das erfindungsgemäße Radiallager für ein Losrad eines Kraftfahrzeuggetriebes umfasst einen Käfig, der mindestens eine Wälzkörperreihe mit einer Vielzahl von Wälzkörpern in Wälzkörpertaschen rollend haltert.

Käfige von Radiallagern sind hohlzylindrische einteilig umfangsseitig geschlossene oder einmal umfangsseitig geschlitzte in ihren Umrissen hohlzylindrische oder umfangsseitig benachbarte und umfangsseitig zusammen passende segmentförmige Bauteile, die radial durchgängige Fenster, sogenannte Taschen, aufweisen. Die Werkstoffe der Käfige sind Metalle oder Kunststoffe. Käfige von Axiallagern sind scheibenförmige mit Taschen durchsetzte Bauteile.

In den Wälzkörpertaschen ist mindestens eine oder sind vorzugsweise mindestens drei Tunnelrollen am Umfang des Käfigs gleichmäßig verteilt angeordnet. Die Tunnelrolle(n) besitzen einen größeren Außendurchmesser als die Wälzkörper. Aufgrund der Elastizität können diese bei höheren Lasten leicht einfedern, bis die an den Rollen in der Lastzone mittragen, so dass die Tunnelrollen mit Schlitz nicht überlastet werden. Das Maß, um das die Tunnelrollen größer sind als die benachbarten Rollen, entspricht dem Maß für den Ausgleich von radialen Spielen in der Lagerstelle, in denen ggf. als Korrekturmaß auch Spielvergrößerungen durch Temperatureinflüsse zu berücksichtigen sind. Das Korrekturmaß entspricht im Radiallager mit einer Tunnelrolle mindestens dem gesamten Korrekturmaß und in einem Rollenlager mit mindestens drei am Umfang gleichmäßig verteilten Rollen mindestens dem halben Korrekturmaß, um das sich das Spiel in den Lagerstellen oder im Lagersitz aufgrund von Wärmedehnung ändern kann..

Erfindungsgemäß sind in dem Losradlager die elastischen Rollen radial elastisch zwischen den Laufbahnen eingespannt. Bei Überschreiten der Mindestlast am Radiallager wirken somit die Tunnelrollen und die Vielzahl der Wälzkörper mit den Wälzlaufbahnen zusammen.

In weiteren Ausgestaltung bildet mehr als eine Tunnelrolle eine Gruppe, die in einer Wälzkörpertasche angeordnet ist, wobei aber vorzugsweise mindestens drei Gruppen gleich verteilt am Umfang des Käfigs angeordnet sind.

In einer weiteren Ausgestaltung der Erfindung ist der mindestens einen Wälzkörperreihe mit der Vielzahl der Wälzkörper, mindestens eine weitere Wälzkörperreihe axial zugeordnet. Die weitere Wälzkörperreihe trägt neben den Wälzkörpern mindestens eine Tunnelrolle, wobei vorzugsweise mindestens drei Wälzkörper auch hier wieder gleich verteilt am Umfang des Käfigs angeordnet sind.

In einer weiteren Ausgestaltung ist eine der weiteren Wälzkörperreihen axial zu beiden Seiten der mindestens einen Wälzköperreihe zugeordnet, wobei jede der weiteren Wälzkörperreihen mindestens drei Tunnelrollen trägt, die ebenfalls wieder gleich verteilt am Umfang des Käfigs der weiteren Wälzkörperreihen angeordnet sind.

Die Anordnung der Tunnelrollen in den beiden Wälzkörperreihen kann verschieden ausgestaltet sein. Eine Ausführungsform sieht vor, dass in den beiden weiteren Wälzkörperreihen die Tunnelrollen jeweils an der gleichen Position angeordnet sind, wobei in einer anderen Ausführungsform die in den beiden weiteren Wälzkörperreihen zugeordneten Tunnelrollen jeweils an versetzen Positionen angeordnet sind.

Aufgrund dieser Ausgestaltung des Längsschlitzes werden die Tunnelrollen bei Vergrößerung der Last am Radiallager, das heißt bei Überschreiten einer gewissen Mindestlast, durch deren elastisch-nachgiebige Eigenschaft leicht zusammengedrückt, wobei die Wälzkörper des Radiallagers nun auch mit den Wälzlaufbahnen zusammenwirken.

Das erfindungsgemäße Radiallager kann eine Außenhülse als Außenring aufweisen. Diese sitzt im Losrad, so dass bei Unterschreiten einer Mindestlast am Radiallager die Tunnelrollen spielfrei an einer Wälzlaufbahn der Außenhülse zusammenwirken, wobei bei Überschreiten der Mindestlast am Radiallager die Tunnelrollen und die Vielzahl der Wälzkörper mit den Wälzlaufbahnen zusammenwirken. Auch kann das Radiallager weitere bekannte Lagerteile aufweisen, wie beispielsweise Innenringe,. Dichtungen usw..

Eine Ausgestaltung der Erfindung sieht eine Losradlagerung mit dem Radiallager und mindestens einem Axiallager vor. Das Axiallager weist einen Käfig, der eine Vielzahl von Wälzkörpern und mindestens eine Tunnelrolle rollend haltert, auf, wobei die mindestens eine Tunnelrolle vorzugsweise einen größeren Außendurchmesser als die Wälzkörper besitzt.

Unabhängig von der Anzahl der Tunnelrollen im Käfig, ist der Außendurchmesser der mindestens einen Tunnelrolle vorzugsweise derart bemessen, dass das Losrad axial vorgespannt auf der Getriebewelle positionierbar ist, so dass keine undefinierte Axialverschiebung des Losrades mehr möglich ist. Dies ermöglicht eine individuelle Positionierung des Losrades im Getriebe, wie vorzugsweise mittig im axialen Bauraum, so dass die Reibung und das Schleppmoment optimiert werden und zum anderen der Ölfluss verbessert wird.

Denkbar ist aber auch, dass ein oder beidseitig des Losrades ein Axiallager mit mindestens einer Tunnelrolle angeordnet ist, wobei die Merkmale der Tunnelrolle mit denen der Tunnelrollen für das Radiallager übereinstimmen.

### Beschreibung der Zeichnungen

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Radiallager für ein Losrad eines Kraftfahrzeuggetriebes ausgestaltet sein kann und stellen somit keine abschließende Begrenzung der Erfindung dar.

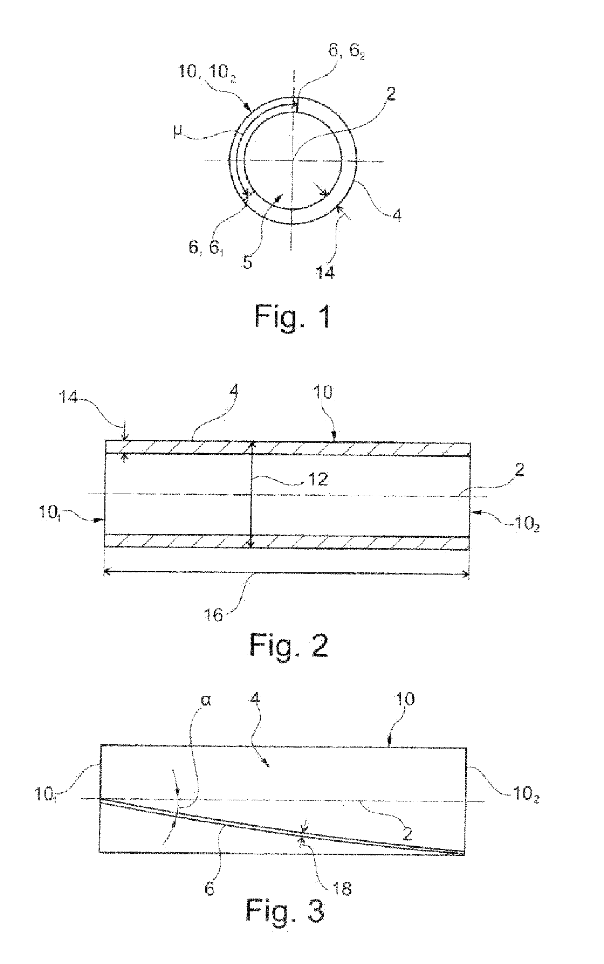

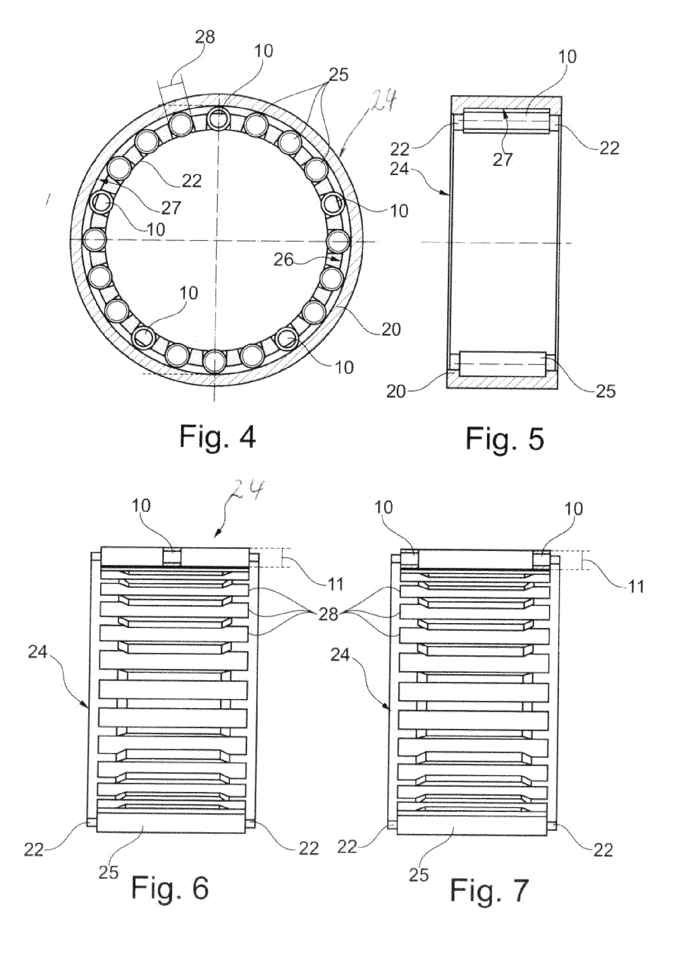

**Fig. 1** zeigt eine Ansicht einer Tunnelrolle 10, die bei dem erfindungsgemäßen Radiallager 1 (s. Figuren 4 bis 11) Verwendung findet, von einem ersten Ende 10₁ oder einem zweiten Ende 10₂ her, wobei dies hier ohne Beschränkung der Allgemeinheit das zweite Ende 10₂ für eine nachfolgende Erläuterung des Mittelpunktswinkels µ sei. Das erste Ende 10₁ ist somit in der Darstellung nach Fig. 1 nicht zu sehen. Die Tunnelrolle 10 besteht aus einer Wandung 4 und hat eine zentrale Bohrung 5 ausgebildet. Die zentrale Bohrung 5 ist symmetrisch um die Achse 2 der Tunnelrolle 10 angeordnet. Die Wandung 4 der Tunnelrolle 10 besitzt eine Wanddicke 14.

Ein Längsschlitz 6 verläuft in der Wandung 4 vom ersten Ende 10₁ der Tunnelrolle 10 zum zweiten Ende 10₂ der Tunnelrolle 10. Der Endabschnitt des Längsschlitzes 6 am zweiten Ende 10₂ sei mit 6₂ bezeichnet. Der Endabschnitt des Längsschlitzes 6 am ersten Ende 10₁ sei mit 6₁ bezeichnet und, da nicht sichtbar in der Darstellung nach Fig. 1, lediglich als Punktlinie angedeutet. Die Achse 2 verläuft durch den Mittelpunkt des Querschnitts der Tunnelrolle 10. Der Längsschlitz 6 überstreicht vom ersten Ende 10₁ zum zweiten Ende 10₂ der Tunnelrolle 10 entlang der Wandung 4 einen Mittelpunktswinkel µ bezüglich des Querschnitts der Tunnelrolle 10 von weniger als 180°.

**Fig. 2** zeigt den Querschnitt durch die Tunnelrolle 10 entlang der Länge 16 der Tunnelrolle 10. Die Tunnelrolle 10 weist ein erstes Ende 10₁ und ein zweites Ende 102 auf. Die Tunnelrolle 10 besitzt einen Außendurchmesser 12. Der Außendurchmesser 12 bemisst sich von der Außenseite der Wandung 4 der Tunnelrolle 10 zur gegenüberliegenden Außenseite der Wandung 4 der Tunnelrolle 10.

**Fig. 3** zeigt eine Seitenansicht der Tunnelrolle 10, wobei der Verlauf des Längsschlitzes 6 entlang der äußeren Wandung 4 der Tunnelrolle 10 erkennbar ist. Der Längsschlitz 6 verläuft dabei vom ersten Ende 10₁ zum zweiten Ende 10₂ der Tunnelrolle 10. Der Längsschlitz 6 ist unter einem Winkel α gegenüber der Achse 2 der Tunnelrolle 10 geneigt. Der Längsschlitz 6 kann Breiten 18 in Bereichen von 0,1 mm bis 0,7 mm aufweisen und ist an einer Rolle in seinem gesamten Verlauf vorzugsweise mit einem der Werte gleich breit.

Die Tunnelrolle 10 ist bezüglich ihres Außendurchmessers 12 und der Wanddicke 14 bevorzugt derart abgestimmt, dass ein Quotient aus der Wanddicke 14 und dem Außendurchmesser einen Wert zwischen 0,04 bis 0,2 aufweist. Analog hierzu ist die Länge 16 der Tunnelrolle 10 in Bezug auf den Außendurchmesser 12 bevorzugt derart abgestimmt, dass ein Quotient aus der Länge 16 und dem Außendurchmesser 12 einen Wert zwischen 0,8 bis 4,0 aufweist. Der Außendurchmesser 12 der Tunnelrolle 10 ist bevorzugt zwischen 2 mm bis 10 mm.

**Fig. 4** zeigt eine erste Ausführungsform eines erfindungsgemäßen Radiallagers 24 für ein Losrad 20 eines Kraftfahrzeuggetriebes, das mindestens eine Wälzkörperreihe (siehe Fig. 5 bis Fig. 7) mit einer Vielzahl von Wälzkörpern 25, vorzugsweise Nadeln, in Wälzkörpertaschen 28 rollend haltert. Neben den Wälzkörpern 25 sind fünf Tunnelrollen 10 gleich verteilt am Umfang 26 angeordnet, die mit einer Fläche 27 des Losrads 20 zusammenwirken. Die fünf Tunnelrollen 10 besitzen einen größeren Außendurchmesser 12 (siehe Fig. 2) als die Wälzkörper 25. Dies bedeutet, dass bei geringer Last auf das Radiallager 24 die fünf Tunnelrollen 10 in rollendem Kontakt mit der Wälzlaufbahn 27 des Losrads 20 und mit einer Wälzlaufbahn an der Getriebewelle 34 sind. Dadurch wird erreicht, dass das Radiallager 24 spielfrei ist. Wirkt eine höhere Last auf das Radiallager 24, werden die fünf Tunnelrollen 10 aufgrund ihrer einfedernd-nachgiebigen Eigenschaften zusammengedrückt, so dass auch die Wälzkörper 25 mit Wälzlaufbahnen im Kontakt stehen.

**Figur 5** zeigt eine Schnittansicht des Radiallagers 24 aus Fig. 4 mit einer Wälzkörperreihe. Der Außendurchmesser 12 (siehe Fig. 2) der Tunnelrolle 10 ist dabei etwas größer als der Außendurchmesser der Wälzkörper 25. Die Wälzkörper 25 bzw. die Tunnelrollen 10 sind derart im Käfig 22 angeordnet, so dass bei Unterschreiten einer Mindestlast am Radiallager 24 die Tunnelrollen 10 spielfrei mit der Wälzlaufbahn 27 des Losrades 20 zusammenwirken. Die Wälzkörper 25 bzw. die Tunnelrollen 10 können mit einer Außenhülse (einem Außenring) eines Lagers zusammenwirken. Dieses Lager kann dann in ein Losrad eingesetzt werden, so dass die Außenhülse des Lagers formschlüssig in dem Losrad 20 sitzt.

**Figur 6** zeigt eine axiale Schnittanschnitt des Radiallagers 24, einen sogenannten Losradkäfig, wobei eine Tunnelrolle 10 eine Gruppe 11 bildet, die in einer Wälzkörpertasche 28 angeordnet ist. Insgesamt sind aber mindestens drei Gruppen 11 gleich verteilt am Umfang 26 (siehe Fig. 4) angeordnet, so dass in einer Wälzkörperreihe 24 neben der Vielzahl der Wälzkörper 25 Tunnelrollen 10 angeordnet sind.

**Figur 7** zeigt das Radiallager 24 nach Fig. 6, bei dem jeweils zwei Tunnelrollen 10 eine Gruppe 11 bilden, die in einer Wälzkörpertasche 28 angeordnet sind. Insgesamt sind aber auch hier mindestens drei Gruppen 11 gleich verteilt am Umfang 26 (siehe Fig. 4) verteilt. Weitere dargestellte Elemente sind bereits in Fig. 7 beschrieben.

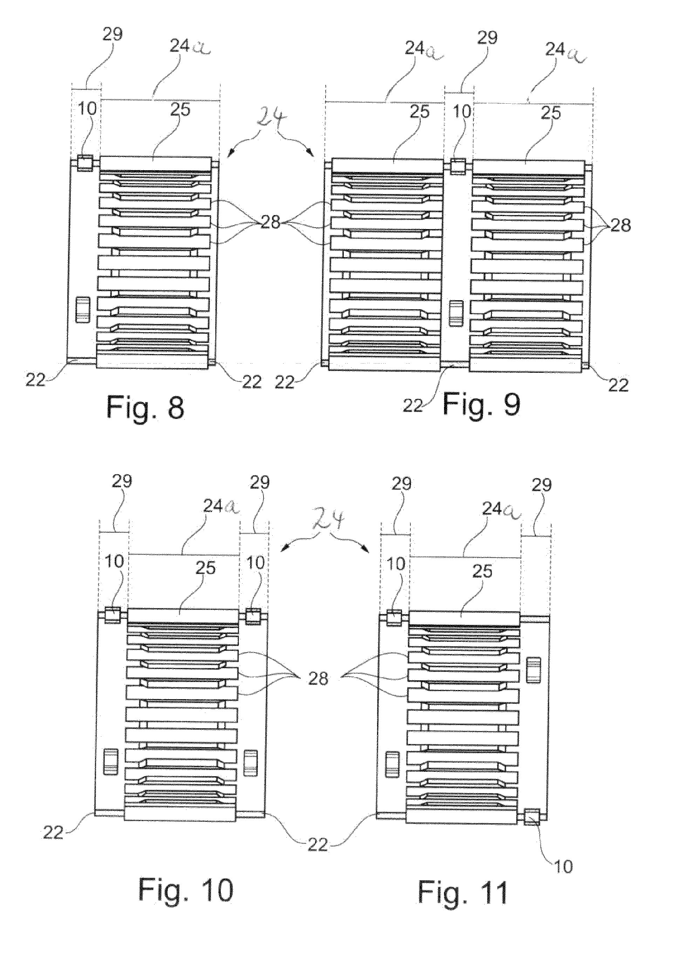

**Figur 8** zeigt eine dritte Ausführungsform des erfindungsgemäßen Radiallagers 24 in axialer Schnittansicht, bei dem einer Wälzkörperreihe 24a mit einer Vielzahl von Wälzkörpern 25 eine weitere Wälzkörperreihe 29 axial zugeordnet ist, die Tunnelrollen 10 aufweist. Somit ist das in Fig. 8 dargestellte Radiallager 24 zweireihig. Sowohl die Wälzköper 25 der ersten Wälzkörperreihe 24a als auch die Tunnelrollen 10 der weiteren Wälzkörperreihe 29 sind in einem gemeinsamen Käfig 22 angeordnet.

Denkbar ist aber auch, dass jede Wälzkörperreihen 24a und 29 einen eigenen Käfig 22 aufweist. Die Käfige 22 der Wälzkörperreihen 24 und 29 sind dann lösbar oder nicht lösbar miteinander verbunden oder voneinander frei.

**Figur 9** zeigt eine vierte Ausführungsform des erfindungsgemäßen Radiallagers 24 in axialer Schnittansicht, bei dem zwei Wälzkörperreihen 24a mit jeweils der Vielzahl der Wälzkörper 25 eine weitere Wälzkörperreihe 29 axial zwischengeordnet ist. Auch trägt die Wälzkörperreihe 29 hier mindestens drei Tunnelrollen 10. Andere Ausführungsformen können weitere axiale Zuordnungen der weiteren Wälzkörperreihe 29 vorsehen, so dass diese nicht nur zwischen die beiden Wälzkörperreihen 24a angeordnet sein muss. Das in Fig. 9 dargestellte Radiallager 24 ist somit dreireihig.

Es ist denkbar, dass jede der Reihen in einem separaten Käfig untergebracht ist.

Denkbar ist auch, dass zusätzlich mindestens drei Tunnelrollen 10 in einer oder in beiden Wälzkörperreihen 24 angeordnet sind. Weitere dargestellte Elemente sind bereits in den vorherigen Figuren beschrieben.

**Figur 10** zeigt eine weitere Ausführungsform des erfindungsgemäßen Radiallagers 24 in axialer Schnittansicht, bei dem der Wälzköperreihe 24 mit der Vielzahl der Wälzkörper 25 axial zu beiden Seiten zwei weitere Wälzkörperreihen 29 zugeordnet sind, die jeweils Tunnelrollen 10 in gleich angeordneter Position tragen.

**Figur 11** zeigt eine axiale Schnittansicht eines Radiallagers 24, vergleichbar mit dem nach Figur 10, bei dem jedoch in den beiden weiteren Wälzkörperreihen 29 die Tunnelrollen 10 jeweils an versetzten Positionen angeordnet sind.

Obwohl in der vorstehenden Beschreibung nicht mehr als drei Wälzlagerreihen 24 und 29 dargestellt sind, soll dies nicht als eine Beschränkung der Erfindung aufgefasst werden. Es können auch mehr als drei Wälzlagerreihen 24 und 29 vorgesehen werden, um ein spielfreies und radial vorgespanntes Radiallager 1 für ein Losrad 20 eines Kraftfahrzeuggetriebes zu schaffen, das zudem bei Betrieb geräuschlos ist.

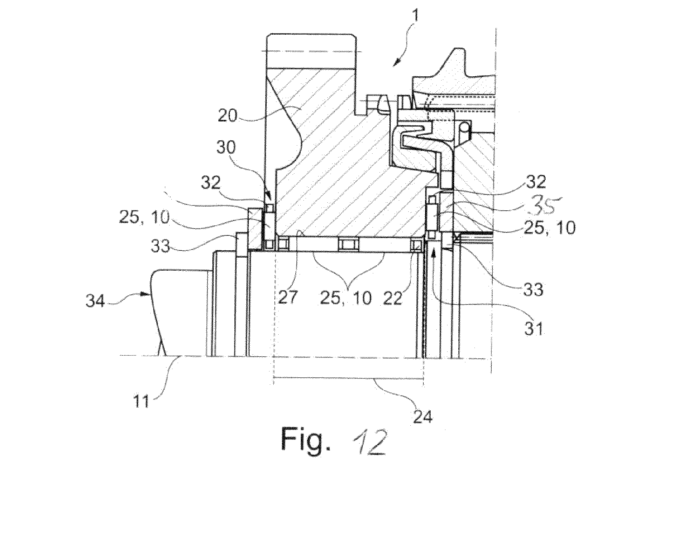

**Figur 12** zeigt eine Teilansicht eines Kraftfahrzeuggetriebes 1 mit der erfindungsgemäßen Losradlagerung im Längsschnitt. Die Losradlagerung umfasst mindestens ein über ein Radiallager 24 auf einer Getriebewelle 34 gelagertes Losrad 20. Das Radiallager 24 ist bereits in Fig. 4 und 5 beschrieben, so dass das Radiallager 24 an dieser Stelle nicht noch einmal erläutert wird.

Senkrecht zu einer Achse 11 der Getriebewelle 34 sind ein erster Anschlag 36 und ein zweiter Anschlag 35 in Form von Laufscheiben für Axiallager angeordnet, die jeweils neben einem Sicherungsring 33, der in einer Ringnut auf der Getriebewelle 34 eingesetzt ist, angeordnet sind.

Zwischen dem ersten Anschlag 36 und dem Losrad 20 ist ein erstes Axiallager 30 angeordnet. Ebenso ist zwischen dem zweiten Anschlag 35 und dem Losrad 20 ein zweites Axiallager 31 angeordnet. Beide Axiallager 30, 31 weisen jeweils einen Käfig 32 auf, der eine Vielzahl von Wälzkörpern 25, vorzugsweise Nadeln, und mindestens eine Tunnelrolle 10 rollend haltert. Wie auch beim Radiallager 24, weist die mindestens eine Tunnelrolle 10 auch hier einen größeren Außendurchmesser 12 (siehe Fig. 2) als die Wälzkörper 25 auf.

Die Ausgestaltung des Käfigs 32 bzw. die Anordnung der mindestens einen Tunnelrolle 10 des ersten und zweiten Axiallagers 30, 31 ist vergleichbar mit der Ausführung des Radiallagers 24 nach Fig. 4 und 5, so dass auch hier auf eine weitere Beschreibung dieser verzichtet wird. Es ist lediglich darauf zu verweisen, dass der Käfig 32 scheibenförmig und axial von Taschen durchbrochen ist. Die Wälzkörper 25 und Tunnelrollen 10 sind lediglich mit ihren Rotationsachsen so ausgerichtet, dass diese unter Last in einer Radialebene die Rotationsachse 11 der Getriebewelle 34 gemeinsam in einem Punkt schneiden.

Im Besonderen ist der Außendurchmesser 12 der mindestens einen Tunnelrolle 10 des ersten und zweiten Axiallagers 30, 31 derart bemessen, dass das Losrad 20 axial vorgespannt auf der Getriebewelle 34 positionierbar ist. Somit ist aufgrund des spielfreien und radial vorgespannten Radiallagers 24 und den spielfrei und axial vorgespannten Axiallagern 30, 31 eine Losradlagerung für ein Kraftfahrzeuggetriebe 1 geschaffen, dass bei Betrieb geräuschlos ist und zudem noch Betriebseigenschaften, wie Reibung bzw. Schleppmoment, optimiert.

## Patentansprüche

1. Radiallager (1) für ein Losrad (20) eines Kraftfahrzeuggetriebes (1), mit Wälzkörpern (25) in Wälzkörpertaschen (28) und mit wenigstens einer Tunnelrolle (10), welche einen größeren Außendurchmesser (12) als die Wälzkörper (25) und einen Längsschlitz (6) aufweist, **dadurch gekennzeichnet, dass** dass der Längsschlitz (6) vom ersten Ende (10₁) zum zweiten Ende (10₂) der Tunnelrolle (10) entlang der Wandung (4) einen Mittelpunktswinkel (µ) bezüglich des Querschnitts der Tunnelrolle (10) bis 360° überstreicht.

2. Radiallager (1) nach Anspruch 1, **dadurch gekennzeichnet, dass** der Längsschnitt (6) vom ersten Ende (10₁) zum zweiten Ende (10₂) der Tunnelrolle (10) entlang der Wandung (4) einen Mittelpunktswinkel (µ) von weniger als 180° überstreicht.

3. Radiallager (1) nach Anspruch 1, **dadurch gekennzeichnet, dass** der Längsschlitz (6) zu parallel zur Rotationsachse der Tunnelrolle (10) ausgerichteten Mantellinien mit wenigstens einem Winkel (α) geneigt verläuft.

4. Radiallager nach Anspruch 3, **dadurch gekennzeichnet, dass der** Wert des Winkels (α) in einem Bereich von 1 ° bis 45° liegt.

5. Radiallager (1) nach Anspruch 1, **dadurch gekennzeichnet, dass** mehr als eine Tunnelrolle (10) eine Gruppe (11) bildet, die in einer Wälzkörpertasche (28) angeordnet ist und wobei mindestens drei Gruppen (11) gleich verteilt am Umfang (26) des Käfigs (22) angeordnet sind.

6. Radiallager nach Anspruch 1, **dadurch gekennzeichnet, dass** der mindestens einen Wälzkörperreihe (24) mit der Vielzahl der Wälzkörper (25), mindestens eine weitere Wälzkörperreihe (29) axial zugeordnet ist, die mindestens drei Tunnelrollen (10) aufweist.

7. Radiallager (1) nach Anspruch 6, **dadurch gekennzeichnet, dass** jeweils eine der weiteren Wälzkörperreihen (29) axial zu beiden Seiten der mindestens einen Wälzköperreihe (24) zugeordnet ist, wobei jede der weiteren Wälzkörperreihen (29) mindestens drei Tunnelrollen (10) aufweist, die gleich verteilt am Umfang (26) des Käfigs (22) der weiteren Wälzkörperreihen (29) angeordnet sind.

8. Radiallager (1) nach Anspruch 7, **dadurch gekennzeichnet, dass** in den beiden weiteren Wälzkörperreihen (29) die Tunnelrollen (10) jeweils an der gleichen Position angeordnet sind.

9. Radiallager (1) nach Anspruch 8, **dadurch gekennzeichnet, dass** in den beiden weiteren Wälzkörperreihen (29) die Tunnelrollen (10) jeweils an versetzten Positionen angeordnet sind.

10. Losradlagerung für ein Kraftfahrzeuggetriebe (1), mit mindestens einem Radiallager (24) nach Anspruch 1 und mindestens einem Axiallager (30) zwischen einem ersten Anschlag (35) und dem Losrad (20), wobei das Axiallager (30) eine Vielzahl von Wälzkörpern (25) aufweist, **dadurch gekennzeichnet, dass** das Axiallager (30) mindestens eine Tunnelrolle (10) aufweist.

11. Losradlagerung für ein Kraftfahrzeuggetriebe (1) nach Anspruch 11, **dadurch gekennzeichnet, dass** die Tunnelrolle (10) einen Durchmesser aufweist, der größer als der Durchmesser der Wälzkörper (25) ist.

12. Losradlagerung für ein Kraftfahrzeuggetriebe (1) nach Anspruch 11, **dadurch gekennzeichnet, dass** die Tunnelrolle (10) geschlitzt ist.
